# EUROPÄISCHE PATENTSCHRIFT

(11) **EP 1 970 020 B1**
(45) Veröffentlichungstag und Bekanntmachung des Hinweises auf die Patenterteilung: **31.08.2011**
(21) Anmeldenummer: 07005025.7
(22) Anmeldetag: 12.03.2007
(51) Int. Cl.: A61C 13/12, A61C 1/06

(54) **Mit einem Elektromotor betreibbares Laborhandstück**
Laboratory handpiece driven by an electric motor
Appareil de travail manuel pouvant fonctionner avec un moteur électrique

(43) Veröffentlichungstag der Anmeldung: 17.09.2008
(73) Patentinhaber: W & H Dentalwerk Bürmoos GmbH, 5111 Bürmoos (AT)
(72) Erfinder: Mangelberger, Michael, 5113 St. Georgen (AT); Steiner, Ernst, 5121 Ostermiething (AT)

(56) Entgegenhaltungen:
- EP-A- 1 738 711
- EP-A1- 0 575 967
- EP-A2- 0 742 000
- WO-A-2005/037124
- WO-A-2006/002692
- WO-A-2006/110670
- DE-A1- 10 033 577
- DE-A1- 10 125 647
- DE-A1-102005 049 887
- DE-B- 1 297 808
- US-A- 3 994 069
- US-A- 4 681 540
- US-A- 4 711 630
- US-A1- 2002 188 183

## Beschreibung

Die vorliegende Erfindung betrifft ein mit einem Elektromotor betreibbares Laborhandstück zur Fein- und Nachbearbeitung von Materialien, die in der Dentaltechnik verwendet werden, insbesondere von Modellen, dentalen Prothesen, zum Beispiel Kronen, Abdrücken oder Abgüssen, Zahnrestaurationskörpern etc.

Die Bearbeitung von dentaltechnischen Materialien durch einen Zahnarzt oder Zahntechniker erfolgt seit Jahrzehnten mit zwei unterschiedlichen Arten von Handgriffen oder Handstücken: In einem ersten Arbeitsgang wird ein mit einem Elektromotor betriebenes Laborhandstück für die spanabhebenden Grobarbeiten eingesetzt. Der Elektromotor treibt dabei ein in einer Werkzeugaufnahme eingesetztes Werkzeug mit Drehzahlen bis etwa 60.000 Umdrehungen pro Minute an, wobei ein vergleichsweise hohes Drehmoment auf das Werkzeug übertragen wird. In einem anschließenden zweiten Arbeitsgang werden Fein- und Nacharbeiten, zum Beispiel die finale Ausformung von Fissuren oder von Zahnkronen durchgeführt. Für derartige Arbeiten ist ein Laborhandstück mit hohen Drehzahlen bei niedriger Drehmomentübertragung von Vorteil, so dass hierfür druckluftbetriebene Laborhandstücke, wie zum Beispiel aus der US 6,146,137 bekannt, verwendet werden. Zusätzlich wird die Druckluft auch als Sperrmedium eingesetzt, mit dem Überdruck im Laborhandstück erzeugt wird und das aus den Öffnungen des druckluftbetriebene Laborhandstücks nach außen austritt, um das Eindringen von Staub und Partikeln in das druckluftbetriebene Laborhandstück zu verhindern.

Zur Lagerung der Werkzeugaufnahme der druckluftbetriebenen Laborhandstücke werden Wälzlager, bevorzugt Kugellager verwendet, deren zueinander bewegte Teile, zum Beispiel die Wälzkörper oder die Laufbahnen, mit einem Schmiermittel versehen sind, um den Verschleiß zu minimieren und damit die Lebensdauer der Lager zu verlängern. Die Verwendung von Druckluft als Antriebs- und Sperrmedium bewirkt jedoch ein ständiges Ausblasen des Schmiermittels aus den Lagern, so dass diese trocken laufen und der Verschleiß zunimmt. Um dies zu verhindern ist der Anwender angehalten, das druckluftbetriebene Laborhandstück regelmäßig zu schmieren, was von vielen Anwendern jedoch als lästige, Zeit raubende Pflicht betrachtet wird.

Um das Ausblasen des Schmiermittels aus den Lagern zu unterbinden, wird in der US 6,146,137 vorgeschlagen, die Druckluft außerhalb des druckluftbetriebenen Laborhandstücks bis zu dessen Vorderende, in dem das Laufrad und die

Werkzeugaufnahme angeordnet sind, zu führen. Bei dieser Lösung stört jedoch die außerhalb des Gehäuses verlaufende Luftleitung die Handhabung des druckluftbetriebenen Laborhandstücks.

WO-A-2006 110 670 beschreibt ein Handstück für dentale Zwecke mit einem Elektromotor und einer Werkzeugaufnahme, die über eine Welle mit dem Elektromotor verbunden ist. Das Handstück ist von einer Flüssigkeitsleitung durchsetzt zur Erzeugung eines Kühlsprays am Bearbeitungsort. Eine Druckgasversorgungseinrichtung, beaufschlagt eine Gasleitung zur Erzeugung des Kühlsprays und eine davon getrennte Gasleitung zur Kühlung des Elektromotors mit Druckluft.

Der vorliegenden Erfindung liegt daher die Aufgabe zugrunde, ein verbessertes Laborhandstück für Fein- und Nacharbeiten an insbesondere Modellen, dentalen Prothesen, zum Beispiel Kronen, Abdrücken oder Abgüssen, Zahnrestaurationskörpern etc. zu schaffen, bei dem insbesondere die Vorteile des druckluftbetriebenen Laborhandstücks, zum Beispiel die hohe Drehzahl, erhalten bleiben, bei dem jedoch die Nachteile des druckluftbetriebenen Laborhandstücks, insbesondere die Gefahr des Ausblasens des Schmiermittels aus den Lagern, verringert oder unterbunden sind.

Diese Aufgabe wird gemäß der vorliegenden Erfindung durch ein Laborhandstück mit den Merkmalen des Anspruchs 1 gelöst. Besonders vorteilhafte Ausführungsformen sind in den abhängigen Ansprüchen angeführt.

Das erfindungsgemäße Laborhandstück umfasst eine Außenhülse, einen Elektromotor, eine Werkzeugaufnahme für ein Behandlungswerkzeug, zumindest eine Welle zur Übertragung der Rotationsbewegung vom Elektromotor auf die Werkzeugaufnahme, eine das Laborhandstück durchsetzenden Flüssigkeitsleitung, eine das Laborhandstück durchsetzende Druckgasversorgungseinrichtung und eine an der Werkzeugaufnahme vorgesehenen Medienabgabevorrichtung, die mit der Flüssigkeitsleitung und der Druckgasversorgungseinrichtung verbindbar oder verbunden ist. Durch den Antrieb der Werkzeugaufnahme mittels eines Elektromotors anstelle von Druckluft entfällt die Notwendigkeit, Druckluft in das Innere des Laborhandstückes zu entlassen, so dass auch keine Gefahr besteht, dass Schmiermittel aus den Lagern ausgetrieben wird. Ein zusätzlicher Vorteil der Verwendung eines Elektromotors besteht in der geringeren Lärmentwicklung.

Erfindungsgemäß besteht die Druckgasversorgungseinrichtung aus einer ersten Druckgaszufuhreinheit zur kontinuierlichen Druckgaszufuhr und einer zweiten Druckgaszufuhreinheit zur diskontinuierlichen Druckgaszufuhr. Beide Druckgaszufuhreinheiten sind bevorzugt mit der Medienabgabevorrichtung verbunden oder verbindbar. Durch diesen Aufbau wird sowohl eine kontinuierliche Kühlung des Motors und / oder des Werkzeugs und / oder eine kontinuierliche Staubbindung oder Staubentfernung ohne Zutun des Anwenders gewährleistet, als auch dem Anwender die Möglichkeit eröffnet, einen zeitlich begrenzten Druckgasstrom, zum Beispiel zum Entfernen einer besonders stark mit Partikeln bedeckten Fläche, abzugeben. Die beiden Druckgaszufuhreinheiten weisen im Sinne eines vereinfachten Aufbaus zumindest teilweise gemeinsame Bauteile oder Abschnitte, zum Beispiel gemeinsame Leitungsabschnitte, auf.

Als Elektromotor wird bevorzugt ein bürstenloser Elektromotor eingesetzt. Der Elektromotor ist so ausgebildet ist, dass er Drehzahlen über etwa 60.000 Umdrehungen pro Minute erreicht. Bevorzugt erzeugt der Elektromotor über etwa 100.000 Umdrehungen pro Minute, wodurch es möglich ist, die Werkzeugaufnahme und den Rotor an, in bzw. auf derselben Welle ohne Zwischenschaltung eines Getriebes anzuordnen.

Die Werkzeugaufnahme kann durch alle bekannten Befestigungsvorrichtungen für Werkzeuge gebildet sein, bevorzugt umfasst sie eine in der zumindest einen Welle zur Übertragung der Rotationsbewegung verschiebbar aufgenommene Spannzange mit federnd ausgebildeten Spannlaschen zur kraftschlüssigen Fixierung des Werkzeugs.

Die Flüssigkeitsleitung und die Druckgasversorgungseinrichtung leiten bevorzugt Wasser und Druckluft zur Medienabgabevorrichtung. Als mit der Flüssigkeitsleitung und der Druckgasversorgungseinrichtung verbundene Medienquellen dienen bevorzugt ein Kompressor und ein Anschluss an das Wasserversorgungsnetz oder ein mit einer Flüssigkeit gefüllter Behälter oder Beutel. In einer alternativen Ausführung umfasst die Druckgasversorgungseinrichtung ein Laufrad im Laborhandstück, das Luft aus der Umgebung ansaugt und in Richtung der Medienabgabevorrichtung fördert, wobei der Luftstrom dabei nur einen Teil des Laborhandstücks durchsetzt.

Von der Medienabgabevorrichtung werden diese Medien entweder getrennt voneinander und / oder zu einem Spray vermischt abgegeben. Dabei dient die Einzelmedien bzw. das Spraygemisch insbesondere zur Kühlung des Werkzeugs und des Werkstücks sowie zur Bindung und zum Wegblasen des während des Bearbeitungsvorgangs entstehenden Staubs. Ein vom Laborhandstück abgebbarer Druckgasstrom verhindert zusätzlich auch das Eindringen von Staubpartikel in das Innere des Laborhandstücks. Jede der Medien kann entweder kontinuierlich und / oder diskontinuierlich, bevorzugt vom Anwender über ein Steuerelement ausgelöst, abgegeben werden. Die Medienabgabe erfolgt des Weiteren gleichzeitig oder alternierend.

Die Medienabgabevorrichtung weist eine oder mehrere Öffnungen auf, von denen zumindest eine bevorzugt eine Düse umfasst. Die Medienabgabevorrichtung bzw. deren Öffnungen sind bevorzugt am distalen Ende des Laborhandstücks, insbesondere um die Werkzeugaufnahme angeordnet. Sind mehrere Öffnungen vorgesehen und ist jede Öffnung mit jeder Medienquelle verbindbar oder verbunden, so werden im Fall einer alternierenden Medienabgabe alle Medien und Mediengemische durch alle Öffnungen ausgestoßen. Alternativ werden unterschiedliche Medien über jeweils ihnen zugeordnete Öffnungen abgegeben, wobei bevorzugt die Öffnungen für unterschiedliche Medien an unterschiedlichen Stelle des Laborhandstücks angeordnet sind, zum Beispiel die Öffnungen zur Abgabe des Sprays in unmittelbarer Nähe zur Werkzeugaufnahme, so dass das Spray konzentriert auf das Werkzeug und die werkzeugnahe Fläche des Werkstücks trifft, und die Öffnungen für den Druckgasstrom weiter beabstandet von der Werkzeugaufnahme, so dass der Druckgasstrom eine größere Fläche überstreicht.

In einem ersten Ausführungsbeispiel ist die Druckgasversorgungseinrichtung im Bereich des Elektromotors durch die Außenhülse des Laborhandstücks, insbesondere durch die im Wesentlichen kreisförmige ausgebildete Innenwand der Außenhülse, gebildet, so dass der Elektromotor zur Kühlung durch das Druckgas um- und / oder durchströmbar ist. Die Innenwand ist in diesem Bereich bevorzugt frei von Einbauten oder Funktionselementen, so dass eine gleichmäßige Umströmung des Elektromotors erzielt wird. Der Elektromotor ist im Wesentlichen zentrisch in der Außenhülse angeordnet, so dass die Kühlluft ihn gleichmäßige von allen Seiten umströmt. Die Kühlung des Elektromotors ist aufgrund der höheren Drehzahl, i.e. über etwa 60.000 Umdrehungen pro Minute, bevorzugt über etwa 100.000 Umdrehungen pro Minute, und insbesondere bei längerem Betrieb mit hoher Drehmomentabgabe vorteilhaft. Durch die Ausbildung der Außenhülse als Teil der Druckgasversorgungseinrichtung entfällt in vorteilhafter Weise die Notwendigkeit, eine weitere Druckgasleitung oder zumindest eine Zweigleitung für die Motorkühlung zur Verfügung stellen zu müssen. Besonders bevorzugt umfasst die Druckgasversorgungseinrichtung in einem an den Elektromotor anschließenden Abschnitt eine Druckgasleitung zum gezielten An- und / oder Abtransport des Druckgases.

Nach dem Umströmen des Elektromotors wird das Druckgas aus dem Laborhandstück zurück in Richtung der Druckgasquelle oder bevorzugt in Richtung der Werkzeugaufnahme geleitet. Insbesondere strömt es zur Medienabgabevorrichtung und wird über diese an die Umgebung abgegeben, so dass in vorteilhafter Weise das Druckgas sowohl zur Elektromotorkühlung als auch zur Kühlung des Werkzeugs und der Präparationsstelle oder zum Wegblasen des Staubs verwendet wird.

Bevorzugt umfasst die Druckgaszufuhreinheit zur kontinuierlichen Druckgaszufuhr eine erste Druckgasleitung zur Bereitstellung eines Druckgases zur Erzeugung eines Druckgas-Flüssigkeits-Gemisches und eine zweite Druckgasleitung zur Bereitstellung eines Druckgases zur Erzeugung eines Druckgasstroms. Auch diese beiden Druckgasleitungen weisen bevorzugt wiederum gemeinsame Leitungsabschnitte auf. Zumindest eine der Leitungen ist besonders bevorzugt so zu dem oder um den Elektromotor geführt und ist derart ausgebildet, dass das darin geleitete Druckgas den Elektromotor kühlt.

Die Druckgaszufuhreinheit zur diskontinuierlichen Druckgaszufuhr weist bevorzugt ein Schaltelement, besonders bevorzugt ein Schaltventil, auf. Das Schaltelement wird entweder vom Anwender gesteuert oder schaltet selbsttätig in feststehenden oder vom Anwender veränderbaren Zeitabständen. Wird das Schaltelement geöffnet, so fließt ein zusätzlicher Druckgasstrom und / oder Druckgas mit höherem Druck in das Laborhandstück und gegebenenfalls zur Medienabgabevorrichtung, so dass ein erhöhter Druckgasvolumenstrom für den Anwender zur Verfügung steht.

In einem anderen Ausführungsbeispiel ist im Laborhandstück eine Leiteinrichtung zur Führung des Druckgases in eine bevorzugte Richtung vorgesehen, wobei die Leiteinrichtung direkt oder indirekt mit der Medienabgabevorrichtung verbindbar oder verbunden ist. Wird die Druckgasversorgungseinrichtung im Bereich des Elektromotors durch die Außenhülse des Laborhandstücks gebildet ist, so ist eine erste Leiteinrichtung derart ausgebildet, dass das den Elektromotor um- oder durchströmende Druckgas nach Passage des Elektromotors insbesondere in Richtung der Medienabgabevorrichtung leitbar ist. Diese erste Leiteinrichtung hat eine trichterförmige oder sich verjüngende Form, wobei das Ende mit dem größeren Durchmesser dem Elektromotor zugewandt ist, so dass zumindest ein Großteil des Druckgases durch die Leiteinrichtung erfassbar ist. Die Leiteinrichtung umgibt bevorzugt zumindest teilweise den Elektromotor bzw. umragt diesen schürzenförmig. Zumindest ein Teil der Leiteinrichtung ist zwischen dem Elektromotor und der Medienabgabevorrichtung angeordnet. Die erste Leiteinrichtung wird besonders bevorzugt durch die vom Elektromotor beabstandete, diesen umgebende und in Richtung der Medienabgabevorrichtung sich verjüngende Außenhülse des Laborhandstücks und gegebenenfalls durch weitere, daran anschließende oder damit verbundene Bauteile gebildet.

Eine zweite Leiteinrichtung ist derart ausgebildet, dass ein zwischen dem Elektromotor und der Medienabgabevorrichtung angeordnetes Lager von zumindest einem wesentlichen Teil des Druckgases umströmbar ist. Diese Leiteinrichtung umfasst zumindest eine Schürze und / oder eine das Lager zumindest teilweise umgebende Hülse und / oder zumindest ein Dichtelement, insbesondere eine Labyrinthdichtung.

In einem weiteren Ausführungsbeispiel weist die Werkzeugaufnahme des Laborhandstücks eine Hohlwelle auf, in die das Werkzeug einsetzbar ist, wobei der Innendurchmesser der Hohlwelle in etwa 1,6 mm beträgt. Durch die Verwendung dieser Hohlwelle werden feinere Werkzeuge mit einem Durchmesser von etwa 1,6 mm mittels Elektromotor betrieben und zur Fein- und Nachbearbeitung insbesondere von Modellen, dentalen Prothesen, zum Beispiel Kronen, Abdrücken, Abgüssen oder Zahnrestaurationskörpern eingesetzt.

In einem Ausführungsbeispiel umfasst das Laborhandstück eine Steuervorrichtung und einen Versorgungsschlauch, wobei die Steuervorrichtung zumindest teilweise im Laborhandstück oder außerhalb davon angeordnet ist. Bevorzugt erstrecken sich die Flüssigkeitsleitung und die Druckgasversorgungseinrichtung durch den Versorgungsschlauch und besonders bevorzugt bis in die extern vorgesehene Steuervorrichtung, die mit Anschlüssen an die Medienquellen versehen ist. An der Steuervorrichtung sind Stellelemente vorgesehen, so dass der Anwender in einfacher Weise Parameter der Medien, zum Beispiel die Durchflussmenge, verändern oder vorgeben kann. Weitere an der Steuervorrichtung angeordnete Stellelemente ermöglichen es dem Anwender zum Beispiel die maximale Drehzahl, die Drehrichtung oder das Drehmoment zu verändern oder vorzugeben. Insbesondere weist die Steuerung eine Schaltung auf, die die Drehzahl und Leistung des Laborhandstücks konstant hält bzw. auf einen vorgebbaren Wert regelt, wodurch die Bearbeitung des Werkstücks durch ein gleichmäßiges Betriebsverhalten für den Anwender zusätzlich erleichtert wird. Die Vorgabe der Drehzahl- oder Leistungswerte während des Betriebs des Laborhandstücks erfolgt bevorzugt über ein als Teil der Steuervorrichtung ausgebildetes, zusätzliches Stellelement, zum Beispiel einen Knie- oder Fußschalter.

Die Steuervorrichtung ist bevorzugt so ausgebildet, dass auch ein zweites Laborhandstück, insbesondere das Laborhandstück für die spanabhebenden Grobarbeiten anschließbar und damit betreibbar ist. Dies stellt für den Anwender eine erhebliche Vereinfachung beim Bearbeiten der Werkstücke dar. Insbesondere weist die Steuervorrichtung einen zweiten, separaten Anschluss für dieses Laborhandstück und eine eigene Steuer- und / oder Regelschaltung zu dessen Betrieb auf. Des Weiteren ist eine Verteilereinheit vorgesehen, die den beiden Laborhandstücken zumindest ein Medium wie Druckluft oder Wasser in den jeweils benötigten Mengenströmen oder mit den gewünschten Drücken kontinuierlich oder stoßweise zukommen lässt. Das Laborhandstück für die spanabhebenden Grobarbeiten wird dabei nur mit Druckluft versorgt, wohingegen dem erfindungsgemäßen Laborhandstück Druckluft und Wasser zur Verfügung gestellt werden. Die Verteilereinheit umfasst zum Beispiel Verzweigungen und / oder Drosseln und / oder Ventile, insbesondere Magnetventile.

Die Erfindung wird nachfolgend anhand bevorzugter Ausführungsbeispiele und Bezug nehmend auf die beigefügten Zeichnungen erläutert:
Figur 1 zeigt eine Schnittdarstellung entlang einer ersten Schnittebene durch ein Ausführungsbeispiel des Laborhandstücks zur Fein- und Nachbearbeitung insbesondere von Modellen, dentalen Prothesen, zum Beispiel Kronen, Abdrücken, Abgüssen oder Zahnrestaurationskörpern.
Figur 2 zeigt eine Schnittdarstellung entlang einer zweiten Schnittebene durch ein Ausführungsbeispiel des Laborhandstücks.
Figur 3 zeigt eine Ausführungsform einer Steuervorrichtung des Laborhandstücks mit abgenommenem Gehäusedeckel.
Figur 4 zeigt eine Ausführungsform eines von der Steuervorrichtung lösbaren Bedienfelds.

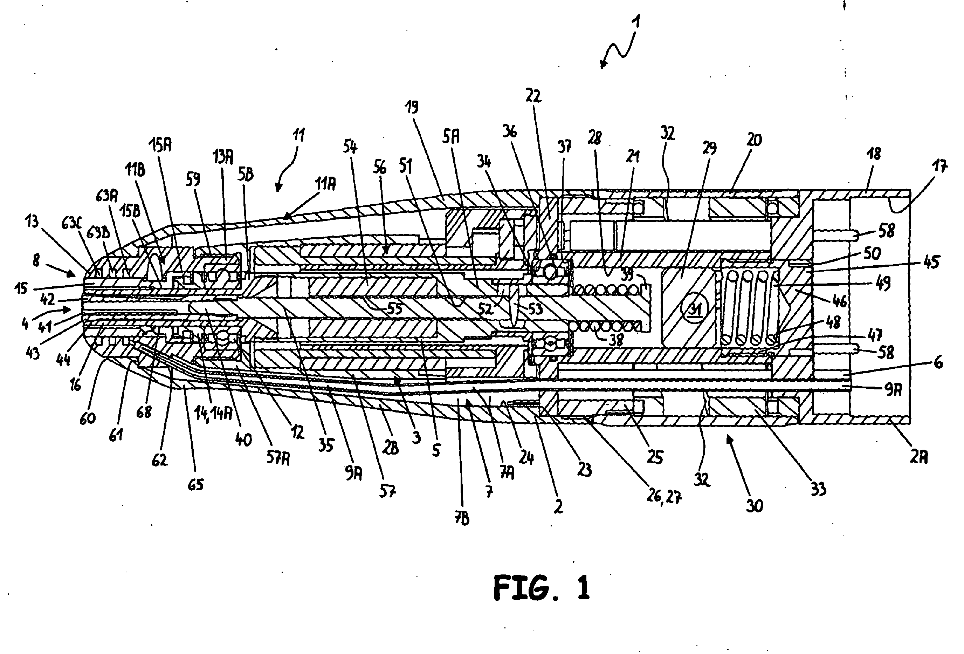

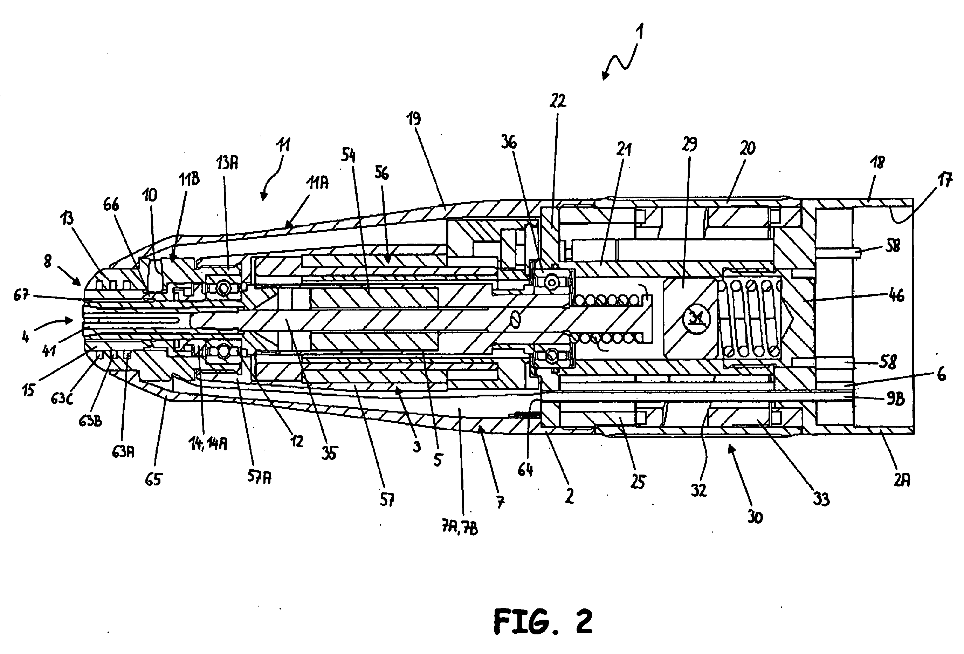

In den Figuren 1 und 2 ist das gleiche Laborhandstück 1 in zwei Schnittdarstellungen mit unterschiedlichen Schnittebenen dargestellt. Bauteile, die in beiden Figuren 1 und 2 zu erkennen sind, werden im Folgenden für beide Figuren gemeinsam beschrieben.

Die Außenhülse 2 des Laborhandstücks 1 ist als länglicher, gerader Hohlkörper mit einem zylindrischen Abschnitt 2A und einem daran anschließenden sich verjüngenden Abschnitt 2B ausgebildet. Die Außenhülse 2 besteht aus einem eine Anschlussbuchse 17 bildenden Anschlussteil 18 und einem die Werkzeugaufnahme 4 und den Motor 3 aufnehmenden Frontteil 19. Zwischen dem Anschlussteil 18 und dem Frontteil 19 ist eine Drehhülse 20 vorgesehen, die, wie weiter unten noch detailliert beschrieben, zur Bedienung der Werkzeugaufnahme 4 dient.

Das Anschlussteil 18 ist über vier nicht dargestellte Schrauben mit einer Lagerhülse 21 verschraubt. Die Lagerhülse 21 weist an ihrem der Werkzeugaufnahme 4 zugewandten Ende eine scheiben- oder flanschartige Verbreiterung 22 auf, die auf einer Ringschulter 23 der Innenwand 24 des Frontteils 19 der Außenhülse 2 lagert. Von der Ringschulter 23 beabstandet, in Richtung der Drehhülse 20 angeordnet, weist die Innenwand 24 ein Innengewinde 26 auf, das mit einem Außengewinde 27 einer Fixierhülse 25 verschraubbar ist. Die Fixierhülse 25 presst den in das Frontteil 19 eingesetzten Flansch 22 der Lagerhülse 21 gegen die Ringschulter 23 und fixiert und verbindet somit das Anschlussteil 18 in bzw. mit dem Frontteil 19.

Die Lagerhülse 21 weist in ihrem Inneren einen Hohlraum 28 auf, in dem ein Kulissenstein 29 verschiebbar aufgenommen ist. Der Kulissenstein 29 ist Teil des Spannmechanismus 30, der zum Öffnen und Schließen der Werkzeugaufnahme 4 und somit zum Einsetzen des Werkzeugs in bzw. zum Entnehmen des Werkzeugs aus der Werkzeugaufnahme 4 dient. Der Kulissenstein 29 ist mit einem Führungsstift 31 versehen, der auf zwei Seiten aus dem Kulissenstein 29 und durch zwei längliche, parallel zur Längsachse des Laborhandstücks 1 verlaufende Schlitze in der Lagerhülse 21 ragt. Die Enden des Führungsstifts 31 greifen in zwei spiralförmige Schlitze 32 einer die Lagerhülse 21 umgebenden Führungshülse 33 ein, die mit der Drehhülse 20 fest verbunden, zum Beispiel verpresst, ist.

Durch das mit einer Öffnung 34 versehene, der Werkzeugaufnahme 4 zugewandte Ende der Lagerhülse 21 ragt der rückwärtige Teil der Antriebswelle 5, der durch ein Kugellager 36 drehbar in der Lagerhülse 21 gelagert ist. Das Lager 36 ist in einem Rücksprung 37 der Lagerhülse 21 angeordnet und durch ebenfalls in der Lagerhülse 21 aufgenommene Elemente wie O-Ringe und Federscheiben gelagert bzw. vorgespannt. Die Antriebswelle 5 ist hohl ausgebildet, so dass in ihrem Inneren eine Zugstange 35 beweglich aufgenommen ist. Die Zugstange 35 ragt über das dem Anschlussteil 18 zugewandte Ende der Welle 5 in den Hohlraum 28 der Lagerhülse 21 hinein und wird durch eine Feder 38 in einer rückwärtigen, dem Anschlussteil 18 zugewandten Position fixiert. In dieser Position ist das verbreiterte Ende 39 der Zugstange 35 vom Kulissenstein 29 beabstandet.

Das dem verbreiterten Ende 39 entgegen gesetzte Vorderende 40 der Zugstange 35 ist mit der Spannzange 41 verbunden, insbesondere verschraubt. Die Spannzange 41 ist als Teil der Werkzeugaufnahme 4 ebenfalls in der als Hohlwelle 16 ausgebildeten Antriebswelle 5 verschiebbar aufgenommen. Die Spannzange 41 umfasst mehrere elastisch federnde, radial nach außen vorgespannte Spannlaschen 42, die an ihrem der Zugstange 35 abgewandten Vorderende einen Außenkonus 43 aufweisen. Die Antriebswelle 5 weist entsprechende konusartige Gegenflächen 44 auf, so dass durch eine Relativbewegung zwischen der Spannzange 41 und der Antriebswelle 5 die Spannlaschen 42 entlang der konusartigen Gegenflächen 44 radial, in Richtung der Mittelachse bewegt werden, wodurch der Abstand zwischen der Spannlaschen 42 verringert und ein Werkzeug in der Spannzange 41 festgeklemmt wird bzw. bei Bewegung in die entgegengesetzte Richtung der Abstand zwischen den Spannlaschen 42 zunimmt, so dass das Werkzeug aus der Spannzange 41 entnommen werden kann.

An dem dem Flansch 22 entgegengesetzten Ende der Lagerhülse 21 ist diese über ein Gewinde mit einer Federbuchse 45 verbunden. Die Federbuchse 45 umfasst eine Basis 46 und eine daran anschließenden hülsenförmigen Abschnitt 47, die gemeinsam eine Sacklochbohrung 48 bilden, in der eine Spiralfeder 49 aufgenommen ist. Die Spiralfeder 49 drückt den Kulissenstein 29 in Richtung der Werkzeugaufnahme 4 und den Stift 31 gegen die der Werkzeugaufnahme 4 zugewandte Seitenfläche des Schlitzes 32. Die Basis 46 ist in einer Bohrung 50 der Seitenwand des Anschlussteils 18 aufgenommen und verschließt somit das Innere des Abschnitts 2B der Außenhülse 2 gegen die Anschlussbuchse 17.

In der in Figur 1 dargestellten Position nimmt die Spannzange 41 ihre Verschlussstellung ein, in der die konusartigen Gegenflächen 44 die Außenkonen 43 der Spannlaschen 42 in Richtung der Mittelachse des Laborhandstücks 1 zwingen und ein in die Spannzange 41 eingesetztes Werkzeug fixiert ist. Die Relativbewegung zwischen der Spannzange 41 und der Antriebswelle 5 zum Öffnen der Werkzeugaufnahme 4 und zum Lösen des Werkzeugs wird über die Drehhülse 20 und die Führungshülse 33 bewirkt. Die beiden Hülsen 20, 33 sind drehbar am Laborhandstück 1 angebracht, wobei der Drehwinkel in etwa 150° beträgt. Durch das Verdrehen der beiden Hülsen 20, 33 wird der Führungsstift 31 gezwungen, der spiralförmigen Form der Schlitze 32 zu folgen, wodurch wiederum der Kulissenstein 29 in Richtung der Werkzeugaufnahme 4 verschoben wird. Während des Verschiebevorgangs kontaktiert die Vorderfläche des Kulissensteins 29 das verbreiterte Ende 39 der Zugstange 35 und verschiebt anschließend die Zugstange 35 und die mit ihr verbundene Spannzange 41 entgegen der Federkraft der Feder 38, so dass die Außenkonen 43 aus dem Eingriff der konusartigen Gegenflächen 44 gelangen und die Spannlaschen 42 sich radial nach außen spreizen. Der Verschiebevorgang wird durch das Entspannen der Feder 49 unterstützt.

Zum Schließen der Spannzange 41 und Fixieren eines in die Spannzange 41 eingesetzten Werkzeugs werden die Hülsen 20, 33 in die entgegengesetzte Richtung gedreht, so dass der Kontakt zwischen dem Kulissenstein 29 und der Zugstange 35 aufgehoben wird und die Zugstange 35 durch die Federkraft der Feder 38 wieder in ihre ursprüngliche Position bewegt wird.

Die Antriebswelle 5 besteht aus mehreren Teilen, im Ausführungsbeispiel gemäß Figur 1 aus zwei Wellenteilen 5A und 5B, die miteinander verbunden sind, zum Beispiel verpresst, verschweißt oder auch lösbar mit einander verschraubt sind. Beide Wellenteil 5A, 5B sind als Hohlwellen ausgebildet, in deren Innenbohrungen 51 die Zugstange 35 bzw. die Spannzange 41 verschiebbar aufgenommen sind. Zwecks Verdrehsicherung der Zugstange 35 ist im Wellenteil 5A ein länglicher Schlitz 52 vorgesehen, in dem ein Stift 53, der die Zugstange 35 durchsetzt und über ihren Außenumfang hinausragt, längsverschieblich aufgenommen ist.

In dem Wellenteil 5A ist auch der Rotormagnet 54 des Elektromotors 3 aufgenommen. Der Wellenteil 5A weist dazu einen hülsenförmigen, dünnwandigen Abschnitt auf, in den der Rotormagnet 54 eingesetzt und befestigt, insbesondere verklebt, ist. Auch der Rotormagnet 54 weist eine zentrale Bohrung 55 auf, durch die die Zugstange 35 verläuft. Außerhalb, rund um den hülsenförmigen Abschnitt des Wellenteils 5A ist der Stator 56 mit den Spulen, den magnetischen Rückschlusselementen, der Motorsensorik etc. des Elektromotors 3 angeordnet. Der gesamte Elektromotor 3 ist von einer Motorhülse 57 umgeben. Die Antriebswelle 5 und somit auch die Zugstange 35, die Werkzeugaufnahme 4 und der Rotor 54 sind durch ein vorderes Kugellager 12 und durch ein hinteres Kugellager 36 drehbar im Laborhandstück 1 gelagert.

Das Laborhandstück 1 ist mit einer mehrteiligen Medienversorgungseinrichtung zur Versorgung des Laborhandstücks 1, des Werkzeugs und der Präparationsstelle mit Medien wie Strom, Druckgas, insbesondere Druckluft, und Wasser versehen. Im Anschlussteil 18 sind dazu mehrere Kontakte und Anschlüsse vorgesehen, zum Beispiel elektrische Kontakte 58 zur Versorgung des Elektromotors 3 mit Strom, eine Flüssigkeitsleitung 6 und mehrere Druckgasleitungen 9A, 9B (siehe Figur 2), die das Laborhandstück 1 mit den jeweiligen Medienquellen verbinden. Die Verbindung erfolgt über einen nicht dargestellten Versorgungsschlauch, durch den sich die Flüssigkeitsleitung 6 und die die Druckgasleitungen 9A, 9B umfassende Druckgasversorgungseinrichtung 7 erstrecken.

Die dem Laborhandstück 1 zugeführten Medien Druckluft und Wasser werden über eine Medienabgabevorrichtung 8 an dem der Anschlussbuchse 17 abgewandten Vorderende des Laborhandstücks 1 auf das Werkzeug, das Werkstück und die Präparationsstelle abgegeben. Die Medienabgabevorrichtung 8 umfasst eine Medienabgabehülse 13 in der die Medien aufgenommen, durchgeleitet, vermischt und von der die Medien abgegeben werden. Die Medienabgabehülse13 ist an ihrem rückwärtigen, der Anschlussbuchse 17 zugewandten Ende über ein Gewinde 59 mit einem Fortsatz der Motorhülse 57 verbunden. Ihr abgerundetes, den Konen 43 der Spannlaschen 42 zugewandtes Ende ist in einer Öffnung 60 der Außenhülse 2 des Laborhandstücks 1 aufgenommen. Eine Ringschulter 61 an der Innenwand 24 der Außenhülse 2 lagert und stützt die Medienabgabehülse 13 im Laborhandstück 1. Zwischen der Medienabgabehülse 13 und dem vorderen Wellenteil 5B befindet sich eine Lagerhülse 15, die mit der Medienabgabehülse 13 fest verbunden und von dem rotierenden Wellenteil 5B beabstandet ist.

Die Medienabgabehülse 13 dient zur Abgabe eines Wasser-Druckluft-Gemisches oder Sprays zur Kühlung des Werkzeugs und der Präparationsstelle und zum Binden von Staub, der bei der Bearbeitung des Werkstücks entsteht. Dazu weist die Medienabgabehülse 13 zwei Eingangsbohrungen (nur eine davon mit dem Bezugszeichen 62 ist in der Figur 1 erkennbar) auf, in die die Sprayluftleitung 9A und die Flüssigkeitsleitung 6 getrennt voneinander münden. Die Eingangsbohrungen 62 sind mit einer ersten Ringnut 63A verbunden, in der das Wasser und die Druckluft miteinander in Kontakt gebracht und vermischt werden. Zwei weitere Ringnuten 63B, 63C sind parallel zur ersten Ringnut 63A in der Medienübergabehülse 13 angeordnet, wobei alle drei Ringnuten 63A, 63B, 63C in Richtung des Wellenteils 5B durch die Lagerhülse 15 abgedeckt und abgedichtet sind. Die drei Ringnuten 63A, 63B, 63C sind über Kanäle oder Nuten in der Lagerhülse 15 miteinander verbunden, so dass die Druckluft und das Wasser alle drei Ringnuten 63A, 63B, 63C durchströmen, wodurch eine gleichmäßige Durchmischung von Wasser und Druckluft erreicht wird. Die letzte Ringnut 63C ist über weitere Kanäle oder Nuten in der Medienabgabehülse 13 mit zumindest einer, bevorzugt drei Abgabeöffnungen verbunden, so dass das Spray von der Medienabgabehülse 13 an die Umgebung abgegeben wird.

Die Medienabgabehülse 13 dient auch der Abgabe eines Druckgasstroms, insbesondere eines Druckluftstroms, zum Aus- und Wegblasen von Staub, der während der Bearbeitung des Werkstücks entsteht. Dieser Druckluftstrom wird im Weiteren auch als Ausblasluftstrom bezeichnet. Die Zufuhr des Ausblasluftstroms erfolgt über einen separaten, von der Versorgung des Laborhandstücks 1 mit Druckluft für das Spray getrennten Versorgungsweg, der in Figur 2 dargestellt ist. Ausgehend von der Anschlussbuchse 17 erstreckt sich eine Druckgasleitung 9B durch das Laborhandstück 1 und durch eine Bohrung 64 des Flansches 22 der Lagerhülse 21. Hier endet die Leitung 9B, so dass die Druckluft im Weiteren durch die Außenhülse 2, die im Bereich des Elektromotors 3 des Laborhandstücks 1 als Teil der Druckgasversorgungseinrichtung 7 ausgebildet ist, fließt. Die Befestigung des Flansches 22 in der Außenhülse 2 durch die Fixierhülse 25 und die Ringschulter 23 ist derart fest, dass in vorteilhafter Weise keine weiteren Dichtmittel zur Abdichtung des Innenraums 24 gegen den von der Drehhülse 20 umgebenen Innenraum benötigt werden.

Vor der Ringschulter 61, wo der sich verengende Kopfabschnitt 65 der Außenhülse 2 entspringt, weist die Medienübergabehülse 13 eine Querbohrung 10 (Figur 2) auf, die als Druckgasleitung dient und die Druckluft radial zur Welle 5 durch die Medienübergabehülse 13 zwingt. Durch eine weitere Querbohrung 66 durchfließt die Ausblasluft die Lagerhülse 15 und gelangt in einen Ringspalt oder Ringkanal 67, der durch einen Zwischenraum zwischen dem Wellenteil 5B und der Lagerhülse 15 gebildet ist. Von diesem Ringkanal 67 fließt die Druckluft in die Umgebung.

Die Führung des Ausblasluftstroms im Bereich des Elektromotors 3 in der Außenhülse 2 und somit rund um den Elektromotor 3 hat den Vorteil, dass dieser Druckluftstrom zusätzlich auch als Kühlmedium eingesetzt werden kann, das Wärme abtransportiert, die vom Elektromotor 3 erzeugt und abgegeben wird. Dies ist insbesondere deswegen notwendig, da der Elektromotor 3 hohe Drehzahlen, bevorzugt über 100.000 Umdrehungen pro Minute erreichen muss, damit das Laborhandstück 1 seine Zweckbestimmung, nämlich die Fein- und Nachbearbeitung insbesondere von Modellen, dentalen Prothesen, zum Beispiel Kronen, Abdrücken, Abgüssen oder Zahnrestaurationskörpern, erfüllen kann. Mit den hohen Drehzahlen ist unweigerlich eine erhöhte Wärmeentwicklung und Wärmeabgabe verbunden, die bei längerem Betrieb zu einer Erwärmung der Außenhülse 2 bis zu Temperaturen führt, die es für den Anwender zumindest unangenehm machen, die Außenhülse 2 mit bloßen Händen zu halten.

Die beiden Versorgungswege für die Sprayluft und für die Ausblas-/Kühlluft bilden gemeinsam die kontinuierliche Druckgaszufuhreinheit 7A, die, wenn das Laborhandstück 1 in Betrieb genommen ist, kontinuierlich Druckluft fördern. Zusätzlich zu dieser kontinuierlichen Druckgaszufuhreinheit 7A umfasst die Druckgasversorgungseinrichtung 7 auch noch eine diskontinuierliche Druckgaszufuhreinheit 7B, die stoßweise Druckgas, insbesondere Druckluft, in das Laborhandstück 1 fördert. Dieser zeitlich begrenzte Druckstoß wird bevorzugt vom Anwender ausgelöst und wird zum Beispiel zum Wegblasen von fest auf dem Werkstück haftenden Staubpartikeln verwendet.

Gemäß dem Ausführungsbeispiel des Laborhandstücks 1 nach den Figuren 1 und 2 umfasst die diskontinuierliche Druckgaszufuhreinheit 7B denselben Versorgungsweg wie die kontinuierliche Druckgaszufuhreinheit 7A, nämlich die Druckgasleitung 9B, die als Luftleitung dienende Außenhülse 2 im Bereich des Elektromotors 3, die Bohrung 10 der Medienübergabehülse 13, die Bohrung 66 der Lagerhülse 15 und den Ringkanal 67. Auch im Versorgungsschlauch erfolgt die Förderung der Ausblas-/Kühlluft und des diskontinuierlichen Luftstromstoßes durch die gleiche Leitung. Selbstverständlich besteht jedoch auch die Möglichkeit, dass die diskontinuierliche Druckgaszufuhreinheit 7B zumindest teilweise einen eigenen Versorgungsweg mit eigenen Bauteilen wie Leitungen, Bohrungen etc. aufweist.

Das freie Um- bzw. Durchströmen des Elektromotors 3 mit Druckluft zur Wärmeabfuhr bringt die Notwendigkeit mit sich, die Druckluft insbesondere nach der Passage um und / oder durch den Elektromotor 3 wiederum zu sammeln und in eine bevorzugte Richtung zu leiten. Dafür ist im Laborhandstück 1 eine Leitvorrichtung 11 vorgesehen. Wäre eine derartige Leitvorrichtung 11 nicht vorgesehen, so bestünde die Gefahr dass die Druckluft mit empfindlichen Bauteilen im Laborhandstück 1 in Kontakt kommt, zum Beispiel mit dem Kugellager 12, aus dem ein darin enthaltenes Schmiermittel ausgeblasen würde, wodurch das Lager 12 trocken laufen und seine Lebensdauer erheblich reduziert würde, oder mit einem im Laborhandstück 1 angeordneten Temperatursensor, dessen Messergebnisse durch den Kontakt mit der Druckluft verfälscht würden, oder mit wärmeempfindliche Bauteilen wie Sensoren, die durch den Kontakt mit der Druckluft geschädigt werden würden.

Das Laborhandstück 1 gemäß den Figuren 1 und 2 weist eine erste Leiteinrichtung 11A und eine zweite Leiteinrichtung 11 B für den Ausblas-/Kühlluftstrom auf. Die erste Leiteinrichtung 11 A dient insbesondere der Führung des Druckluftstroms in Richtung der Medienabgabehülse 13 und durch diese hindurch zur Abgabe über den Ringkanal 67. Die Leiteinrichtung 11A weist dazu bevorzugt einen sich verringernden Strömungsquerschnitt auf, so dass der Druckluftstrom geleitet und gleichzeitig im Sinn einer Düse beschleunigt wird. Die Leiteinrichtung 11A wird durch die sich konisch verjüngende Außenhülse 2, insbesondere deren Abschnitt 2B, durch die Druckgasleitung 10 (Figur 2), die Bohrung 66 und den Ringkanal 67 gebildet, wobei, wie aus der Figur 2 zu erkennen ist, der Strömungsquerschnitt der Leiteinrichtung 11A von der Außenhülse 2 bis zum Ringkanal 67 abnimmt.

Die zweite Leiteinrichtung 11 B schirmt insbesondere das Kugellager 12 vor dem Druckluftstrom ab. Sie besteht aus dem mit einer Ringschulter versehenen Vorderende 57A der Motorhülse 57, dem rückwärtigen Abschnitt 13A der Medienübergabehülse 13, dem Wellenteil 5B, einem damit verbundenen, rotierbaren Dichtelement 14, insbesondere einer Labyrinthdichtung 14A, das auf den Wellenteil 5B aufgepresst ist, und dem rückwärtigen Abschnitt 15A der Lagerhülse 15. Aufgrund der festen und dichten Verbindungen zwischen diesen Bauteilen wird zumindest der Großteil des Druckluftstroms um das Lager 12 geleitet. Zusätzlich ist Lagerhülse 15 mit einem Abschnitt 15B mit einem verdickten Querschnitt versehen, so dass der für die Rotation der Welle 5 benötigte Abstand in Form eines Spaltes 68 zwischen der Lagerhülse 15 und dem Wellenteil 5B besonders gering ist. Der Strömungsquerschnitt des Spaltes 68 ist insbesondere geringer als der Strömungsquerschnitt des Ringkanals 67, so dass der Druckluftstrom den Weg des geringeren Widerstands über den Ringkanal 67 in die Umgebung außerhalb des Laborhandstücks 1 wählt.

Durch diese Kapselung oder Abschirmung des Lagers 12 vom Druckluftstrom besteht die Möglichkeit, das Lager 12 derart auszubilden, dass es vom Anwender nicht mehr gewartet oder gepflegt werden muss, ohne dabei an Lebensdauer im Vergleich zu einem gewarteten Kugellager zu verlieren. Das Lager 12 ist dabei insbesondere als ein Kugellager ausgebildet, das vor dem Einbau des Lagers 12 in das Laborhandstück 1 mit einem Schmiermittel versehen oder getränkt ist, das über die gesamte Lebensdauer des Laborhandstücks 1 die Schmierung des Lagers 12 sicherstellt. Alternativ oder zusätzlich sind das Lager 12 oder Teile davon mit einer Beschichtung versehen oder bestehen vollständig aus einem Material, die eine Wartung überflüssig machen. Derartige Materialien können zum Beispiel keramische Werkstoffe umfassen.

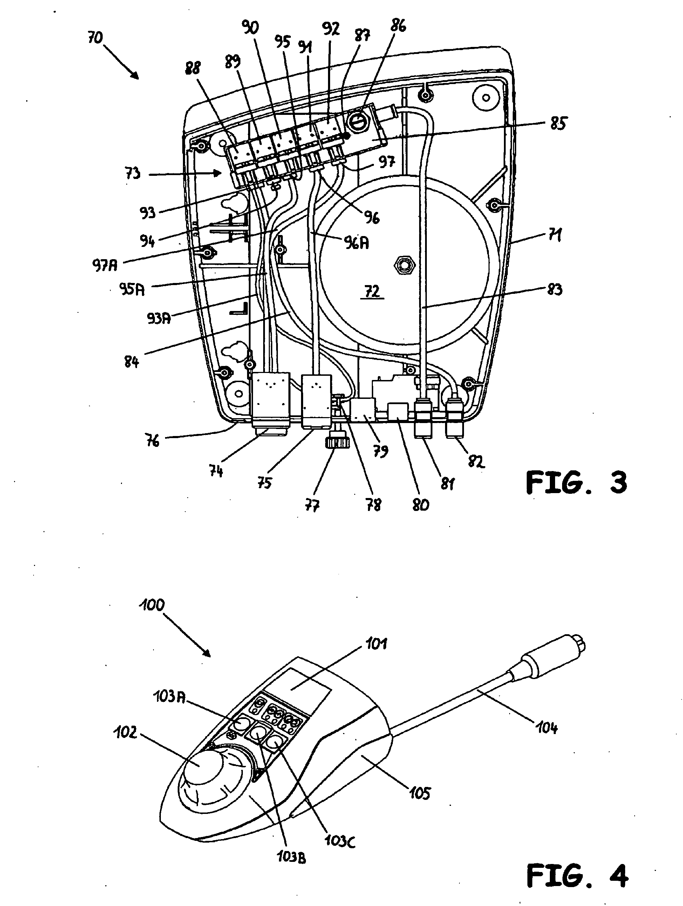

Figur 3 zeigt eine Steuervorrichtung 70 des Laborhandstücks 1, wobei die Steuervorrichtung 70 als ein separates Element ausgebildet ist, das mit dem Laborhandstück 1 über einen Versorgungsschlauch lösbar verbunden ist. Alternativ ist es natürlich möglich, dass zumindest Teile der Steuervorrichtung in der Außenhülse 2 des Laborhandstücks angeordnet sind. Die Steuervorrichtung 70 umfasst ein Gehäuse 71, wobei in der Figur 3 der Deckel des Gehäuses 71 abgenommen ist, um Einsicht in das Gehäuse 71 und auf die auf der Gehäusebasis angeordneten Bauteile, insbesondere die Bauteile zur Medienversorgung des Laborhandstücks 1, zu ermöglichen.

Im Gehäuse 71 sind ein Transformator 72 zur Spannungsversorgung eines oder mehrerer Elektromotore 3 und eine Verteilereinheit 73 zur Verteilung und Zuführung der Medien, insbesondere von Wasser und einem Druckgas, an zumindest ein Laborhandstück 1 aufgenommen. Die Steuervorrichtung 70 weist an ihrer Frontseite mehrere Bedienelemente und Anschlüsse auf: Anschluss- oder Kupplungsvorrichtung 74 dient zum Anschluss eines Versorgungsschlauchs zur Verbindung des Laborhandstücks 1 zur Fein- und Nachbearbeitung insbesondere von Modellen, dentalen Prothesen, zum Beispiel Kronen, Abdrücken, Abgüssen oder Zahnrestaurationskörpern. An Anschluss- oder Kupplungsvorrichtung 75 kann ein weiteres Laborhandstück angeschlossen werden, insbesondere ein mit einem Elektromotor betriebenes Laborhandstück für die spanabhebenden Grobarbeiten. Beide Anschlussvorrichtungen 74, 75 können eine Steck-, Schraub-, Dreh- oder Schnellkupplung umfassen. Sie sind gemäß Figur 3 als Steckbuchsen ausgebildet, in denen Anschlüsse für die jeweiligen Medienleitungen, elektrische Kontakte etc. enthalten sind.

Neben der Anschlussvorrichtung 74 ist eine Öffnung 76 für ein nicht dargestelltes, vom Anwender bedienbares Bedienelement, insbesondere einen Hebel oder einen Taster, vorgesehen, das die Abgabe des über die diskontinuierliche Druckgaszufuhreinheit 7B dem Laborhandstück 1 zuführbaren, stoßweisen Druckgasstroms bewirkt. Neben der Anschlussvorrichtung 75 ist ein Drehknopf 77 vorgesehen, über den ein Steuerelement 78, insbesondere ein Steuerventil, bevorzugt ein Quetschventil, bedienbar ist, mit dem der Volumenstrom des Wassers für das vom Laborhandstück 1 abgebbare Spray einstellbar ist.

An der Frontseite des Gehäuses 71 befindet sich des Weiteren ein Anschluss 79 in Form einer Steckbuchse für den Fußschalter, über den der Anwender den Betrieb der Laborhandstücke steuert. Daneben ist ein Anschluss 80 für ein lösbar mit der Steuervorrichtung 70 verbundenes Bedienfeld 100, das in Figur 4 dargestellt ist, vorgesehen. Schließlich weist das Gehäuse 71 noch zwei Medienanschlüsse 81, 82 zur Verbindung der Steuervorrichtung 70 und des Laborhandstücks 1 mit externen Medienquellen, insbesondere mit dem Wasserversorgungsnetz und mit einer Druckgasquelle, bevorzugt mit einem Druckluftkompressor, auf. In der Figur 3 nicht erkennbar ist eine Buchse zur Verbindung der Steuervorrichtung 70 und des Laborhandstücks 1 mit einer Stromversorgung sowie ein Schalter zum Ein-/Ausschalten der Steuervorrichtung 70.

Die beiden Medienanschlüsse 81, 82 sind über die Leitungen 83, 84 mit der Verteilereinheit 73 verbunden. Die Verteilereinheit 73 umfasst einen Verteilerblock 85, in den die beiden Leitungen 83, 84 münden, einen Druckregler 86, eine Drossel 87, fünf Schaltventile 88 - 92, insbesondere Magnetventile, und fünf am Verteilerblock 85 angeordnete Ausgänge oder Anschlussvorrichtungen 93 - 97 für die Medienleitungen 93A, 95A - 97A, die die Medien zu den beiden Anschlussvorrichtungen 74, 75 leiten. Im Verteilerblock 85 sind mehrere Bohrungen und Verzweigungen vorgesehen, die die Medien den Ventilen 88 - 92 und den Anschlussvorrichtungen 93 - 97 zuführen. Der Druckregler 86 regelt den Druck eines Teilstroms der von der Leitung 83 kommenden und in den Verteilerblock 85 eingetretenen Druckluft auf etwa 2 bar.

Das Ventil 92 wird direkt mit der von der Leitung 83 kommenden Druckluft, die in etwa einen Luftdruck von 6 bar aufweist, versorgt. Es gibt in geöffnetem Zustand die Druckluft an die Anschlussvorrichtung 96 ab, die wiederum über die Leitung 96A mit dem Anschluss 75 für das Laborhandstück für die spanabhebenden Grobarbeiten verbunden ist. Dieses Laborhandstück wird ausschließlich mit der Druckluft mit etwa 6 bar Luftdruck versorgt, wobei die Druckluft als Ausblasluft zum Entfernen von Staub und zum Unterbinden des Eindringens von Staub in das Laborhandstück verwendet wird.

Das Ventil 90 erhält Druckluft, deren Luftdruck zuvor vom Druckregler 86 auf etwa 1,5 - 2 bar verringert wurde und die anschließend auch noch die Drossel 87 passiert, so dass die Druckluft beim Austritt aus der Verteilereinheit 73 einen Luftdruck von etwa 0,5 bar aufweist. Das Ventil 90 ist über die Anschlussvorrichtung 97 und die Leitung 97A mit der Anschlussvorrichtung 74 für das Laborhandstück 1 verbunden. Die Druckluft mit etwa 0,5 bar Luftdruck wird über die Versorgungsleitung der Druckgasleitung 9B (Figur 2) des Laborhandstücks 1 zugeführt und dient als Ausblas- und Kühlluft.

Ebenfalls mit der Anschlussvorrichtung 97 und der Leitung 97A ist das Ventil 91 verbunden. Dem Ventil 91 wird jedoch, im Gegensatz zu Ventil 90, Druckluft zugeführt, die direkt von der Leitung 83 kommt und die somit einen Luftdruck von etwa 6 bar aufweist. Das Ventil 91 ist über das in der Öffnung 76 aufgenommenen Bedienelement oder den Fußschalter direkt oder indirekt durch den Anwender ansteuerbar, insbesondere wird es durch den Anwender geöffnet, so dass bei geöffnetem Ventil 91 die Druckgasleitung 9B (Figur 2) des Laborhandstücks 1 mit Druckluft mit etwa 6 bar Luftdruck versorgt wird. Sobald das Ventil 91 wieder geschlossen und die Abgabe von Druckluft mit 6 bar Luftdruck an die Anschlussvorrichtung 97 beendet ist, strömt wiederum nur noch vom Ventil 90 kommende Druckluft mit einem Luftdruck von etwa 0,5 bar in die Druckgasleitung 9B des Laborhandstücks 1. Das Ventil 91 dient damit also der Abgabe eines diskontinuierlichen Druckluftstoßes an das Laborhandstück 1.

Das Ventil 89 ist über die Anschlussvorrichtung 95, die Leitung 95A und den Anschluss 74 mit der Druckgasleitung 9A (Figur 1) zur Versorgung des Laborhandstücks 1 mit Sprayluft verbunden. Die dafür verwendete Druckluft passiert den Druckregler 86 und weist damit einen Luftdruck von etwa 1,5 - 2 bar auf.

Das Ventil 88 erhält vom Medienanschluss 82 über die Leitung 84 Wasser, das es in geöffnetem Zustand über die Anschlussvorrichtung 93, die Leitung 93A, den Laborhandstückanschluss 74 und den Versorgungsschlauch an die Flüssigkeitsleitung 6 (Figur 1) des Laborhandstücks 1 abgibt, so dass es mit Druckluft aus der Druckgasleitung 9A zum Druckluft-Wasser-Spray vermischt wird. An der Leitung 93A ist das Quetschventil 78 zur Einstellung der Durchflussmenge des Wassers und damit des Wasseranteils im Spray angeordnet.

Anstelle der Flüssigkeitsversorgung über den mit der Wasserversorgung verbundenen Anschluss 82 wird dem Laborhandstück 1 in einer alternativen Ausführungsform von einem mit der Steuervorrichtung 70 verbindbaren oder in der Steuervorrichtung 70 aufgenommenen Behälter Flüssigkeit zugeführt. Zum Austreiben der Flüssigkeit aus dem Behälter wird bevorzugt Druckluft verwendet, die in den Behälter eingebracht wird. Für diese Ausführungsform ist am Verteilerblock 85 ein weiterer Anschluss 94 vorgesehen, der mit dem Ventil 89 verbunden ist und von diesem Druckluft erhält, deren Luftdruck zuvor vom Druckregler 86 auf etwa 1,5 - 2 bar reduziert wurde, und die über eine Druckluftleitung in den Flüssigkeitsbehälter fließt. Die aus dem Flüssigkeitsbehälter gedrückte Flüssigkeit wird über eine weitere Leitung dem Ventil 88, der Anschlussvorrichtung 93 und der Leitung 93A zugeführt. Wird anstelle des Behälters der Anschluss 82 für die Flüssigkeitsversorgung verwendet, so ist Anschlussvorrichtung 94 durch ein Verschlusselement, zum Beispiel einen Stöpsel, abgesperrt.

Das Öffnen und Schließen der Ventile 88 - 92 wird von einer nicht dargestellten Steuerung bzw. von entsprechenden Schaltkreisen ausgelöst. Die Ventile 91, 92, die Druckluft mit einem Luftdruck von 6 bar weitergeben, werden durch das Betätigen eines in der Öffnung 76 aufgenommenen Bedienelements, zum Beispiel eines Hebels oder eines Tasters, oder über einen Fußschalter geöffnet. Das Bedienelement ist mit einem Signalgeber, insbesondere einem Magnetelement versehen, in dessen Nähe ein Sensor, insbesondere ein Magnetfeldsensor, zum Beispiel ein Hall-Sensor, angeordnet ist. Bei Betätigung des Bedienelements detektiert der Sensor eine Veränderung des vom Signalgeber abgegebenen Signals, erzeugt ein Sensorsignal und leitet dieses an die Steuerung weiter, die nach Erhalt des Sensorsignals die Magnetventile 91, 92 öffnet bzw. schließt. Dieser vom Anwender auslösbare Druckstoß ist unabhängig vom Betrieb des Elektromotors 3, so dass in vorteilhafter Weise ein Druckstoß auch bei stillstehendem Werkzeug möglich ist.

Das Ventil 90, das Kühl- und Ausblasluft an das Laborhandstück 1 liefert, wird durch die Aktivierung des Elektromotors 3, zum Beispiel durch Betätigen des an den Anschluss 79 angeschlossenen Fußschalters, geöffnet. Die Steuerung erhält dazu vom Fußschalter ein Signal zur Aktivierung des Motors, das gleichzeitig auch als Aktivierungssignal für das Ventil 90 verwendet wird. Wird der Betrieb des Elektromotors beendet, so wird Ventil 90 wieder geschlossen. Auch die Magnetventile 88, 89, die Sprayluft für das Laborhandstück 1 und gegebenenfalls Druckluft zum Austreiben der Flüssigkeit aus dem Flüssigkeitsbehälter bzw. Spraywasser freigeben, werden über diese Signalkette aktiviert, falls der Anwender vorher über das Bedienfeld 100 (Figur 4) die Spraytaste gedrückt und somit die optionale Sprayfunktion ausgewählt hat.

Figur 4 zeigt das Bedienfeld 100, das Teil der Steuervorrichtung 70 ist, jedoch entfernt vom Gehäuse 71 angeordnet und mit diesem über eine Leitung 104, die lösbar an den Anschluss 80 ansteckbar ist, verbunden ist. Durch die Lösbarkeit des Bedienfelds 100 vom Gehäuse 71 kann der Anwender in vorteilhafter Weise das Bedienfeld 100 unmittelbar in seinem Arbeitsbereich positionieren, das voluminösere Gehäuse 71 jedoch an einem entfernteren Ort platzieren, wo es sich weniger störend auf die Tätigkeit des Anwender auswirkt.

An dem Bedienfeld 100 sind eine Anzeige 101 und mehrere Stellelement 102, 103A - C vorgesehen. Das Stellelement 102 ist als Drehknopf ausgebildet und dient der Auswahl einer maximalen Drehzahl für den Elektromotor 3 und das Werkzeug. Über das Stellelement 103A, das wie die beiden anderen Stellelemente 103B und 103C als Taster ausgebildet ist, wählt der Anwender die Drehrichtung des Elektromotors 3 und des Werkzeugs aus. Durch Drücken des Stellelements 103B bestimmt der Anwender sowohl welches der beiden Laborhandstücke, die an die Anschlüsse 74, 75 angeschlossen sind, aktiviert und betrieben werden soll, als auch ob über das Laborhandstück 1 ein Wasser - Luft - Spray abgegeben wird.

Das Bedienelement 103C wird zur Auswahl der drei unterschiedlichen Betriebsarten verwendet, mit denen das Laborhandstück 1 und insbesondere der Elektromotor 3 betrieben werden. In einer ersten Betriebsart wird dem Laborhandstück 1 durch ein vom Anwender betätigbares Steuerelement, zum Beispiel durch den Fußschalter, ein variabler Drehzahlsollwert vorgegeben, auf den der Elektromotor 3 geregelt wird. Die Obergrenze des Drehzahlbereichs, in dem das Laborhandstück 1 betrieben wird, wird durch die Drehzahl, die der Anwender über den Drehknopf 102 auswählt, vorgegeben. In einer zweiten Betriebsart wird das Laborhandstück 1 mit der über den Drehknopf 102 ausgewählten Drehzahl betrieben. Der Anwender muss dazu nur einmal kurz das Steuerelement, zum Beispiel den Fußschalter, betätigen, um die Aktivierung des Elektromotors 3 auszulösen. Lässt er anschließend das Steuerelement los, so wird der Elektromotor 3 dennoch konstant mit der vorgegebenen Drehzahl betrieben. Zum Beenden dieser zweiten Betriebsart betätigt der Anwender das Steuerelement ein weiteres Mal.

Die dritte Betriebsart ist eine Kombination der beiden ersten Betriebsarten: Der Anwender startet mit der ersten Betriebsart, d.h. er betreibt das Laborhandstück 1 mittels einer variablen, von ihm vorgebbaren Drehzahl. Bleibt diese Drehzahl jedoch über einen gewissen Zeitraum, zum Beispiel etwa zwei Sekunden, konstant, so schaltet die Steuervorrichtung 70 selbsttätig in die zweite Betriebsart um, so dass das Laborhandstück 1 mit dieser Drehzahl konstant betrieben wird. Der Anwender kann in diesem Fall das Steuerelement wiederum los lassen, ohne dass der Betrieb des Laborhandstücks 1 unterbrochen wird. Betätigt der Anwender das Steuerelement wieder, so wird das Laborhandstück 1 wieder in der ersten, variablen Betriebsart betrieben.

Die Bedienelemente 102, 103A - C sind mit Stellorganen wie Signalgebern, Sensoren oder Potentiometern verbunden, die die Betätigung der Bedienelemente 102, 103A - C detektieren und entsprechende Signale über die Leitung 104 an die Steuerung weiterleiten. Die ausgewählten Parameter oder Betriebsarten werden auf der Anzeige 101, die mit der Steuerung über die Leitung 104 verbunden ist, dargestellt. Ein längliches, keilförmiges Gehäuse 105 schützt das Bedienfeld vor äußeren Einflüssen wie Staub und Feuchtigkeit.

Die Erfindung ist nicht auf die dargestellten Ausführungsbeispiele beschränkt, sondern umfaßt alle Ausführungsmöglichkeiten, welche unter die Patentansprüche fallen.

## Patentansprüche

1. Laborhandstück (1) zur Fein- und Nachbearbeitung insbesondere von Modellen, dentalen Prothesen, zum Beispiel Kronen, Abdrücken, Abgüssen oder Zahnrestaurationskörpern mit einer Außenhülse (2), einem Elektromotor (3), einer Werkzeugaufnahme (4) für ein Behandlungswerkzeug, zumindest einer Welle (5) zur Übertragung der Rotationsbewegung vom Elektromotor (3) auf die Werkzeugaufnahme (4), einer das Laborhandstück (1) durchsetzenden Flüssigkeitsleitung (6), einer das Laborhandstück (1) durchsetzenden Druckgasversorgungseinrichtung (7) und mit einer an der Werkzeugaufnahme (4) vorgesehenen Medienabgabevorrichtung (8), die mit der Flüssigkeitsleitung (6) und der Druckgasversorgungseinrichtung (7) verbindbar oder verbunden ist, **dadurch gekennzeichnet, dass**
die Druckgasversorgungseinrichtung (7) eine erste Druckgaszufuhreinheit (7A) zur kontinuierlichen Druckgaszufuhr und eine zweite Druckgaszufuhreinheit (7B) zur diskontinuierlichen Druckgaszufuhr umfasst, die Druckgaszufuhreinheit (7B) zur diskontinuierlichen Druckgaszufuhr ein Schaltelement, bevorzugt ein Schaltventil (91), aufweist und die beiden Druckgaszufuhreinheiten (7A, 7B) zumindest teilweise gemeinsame Bauteile oder Abschnitte, zum Beispiel gemeinsame Leitungsabschnitte, aufweisen.

2. Laborhandstück (1) nach Anspruch 1, **dadurch gekennzeichnet, dass** die Druckgasversorgungseinrichtung (7) im Bereich des Elektromotors (3) durch die Außenhülse (2) des Laborhandstücks (1) gebildet ist, so dass der Elektromotor (3) zur Kühlung durch das Druckgas um- und / oder durchströmbar ist.

3. Laborhandstück (1) nach Anspruch 2, **dadurch gekennzeichnet, dass** die Druckgasversorgungseinrichtung (7) in einem an den Elektromotor (3) anschließenden Abschnitt eine Druckgasleitung (10) umfasst.

4. Laborhandstück (1) nach einem der vorhergehenden Ansprüche, **dadurch gekennzeichnet, dass**
die Medienabgabevorrichtung (8) eine oder mehrere Öffnungen aufweist, von denen zumindest eine bevorzugt eine Düse umfasst.

5. Laborhandstück (1) nach Anspruch 4, **dadurch gekennzeichnet, dass** unterschiedliche Medien über jeweils ihnen zugeordnete Öffnungen abgebbar sind.

6. Laborhandstück (1) nach Anspruch 1, **dadurch gekennzeichnet, dass** die Druckgaszufuhreinheit (7A) zur kontinuierlichen Druckgaszufuhr eine erste Druckgasleitung (9A) zur Bereitstellung eines Druckgases zur Erzeugung eines Druckgas-Flüssigkeits-Gemisches und eine zweite Druckgasleitung (9B, 10) zur Bereitstellung eines Druckgases zur Erzeugung eines Druckgasstroms umfasst.

7. Laborhandstück (1) nach einem der vorhergehenden Ansprüche, g**ekennzeichnet durch**
eine Leiteinrichtung (11) zur Führung des Druckgases in eine bevorzugte Richtung,
wobei die Leiteinrichtung (11) direkt oder indirekt mit der Medienabgabevorrichtung (8) verbindbar oder verbunden ist oder zumindest Teile der Medienabgabevorrichtung (8) umfasst.

8. Laborhandstück (1) nach Anspruch 2 und 7, **gekennzeichnet durch** eine Leiteinrichtung (11A) zur Führung des den Elektromotor (3) um- und / oder durchströmenden Druckgasstroms zur Medienabgabevorrichtung (8).

9. Laborhandstück (1) nach Anspruch 7 oder 8, **dadurch gekennzeichnet, dass** die Leiteinrichtung (11) einen sich verringernden Strömungsquerschnitt aufweist.

10. Laborhandstück (1) nach einem der Ansprüche 7, 8 oder 9, **gekennzeichnet durch** eine Leiteinrichtung (11B) zum Umströmen eines zwischen dem Elektromotor (3) und der Medienabgabevorrichtung (8) angeordneten Lagers (12).

11. Laborhandstück (1) nach einem der Ansprüche 7, 8, 9 oder 10, **dadurch gekennzeichnet, dass**
die Leiteinrichtung (11) eine Druckgasleitung (10) und / oder eine Schürze und / oder eine Hülse (13, 15) und / oder zumindest ein Dichtelement (14), insbesondere eine Labyrinthdichtung (14A), und / oder eine Bohrung (66) und / oder einen Ringkanal (67) umfasst.

12. Laborhandstück (1) nach einem der vorhergehenden Ansprüche, **gekennzeichnet durch**
eine Steuervorrichtung (70) und einen Versorgungsschlauch, wobei die Flüssigkeitsleitung (6) und die Druckgasversorgungseinrichtung (7) sich **durch** den Versorgungsschlauch und bevorzugt bis in die Steuervorrichtung (70) erstrecken.

13. Laborhandstück (1) nach Anspruch 12, **dadurch gekennzeichnet, dass** die Steuervorrichtung (70) so ausgebildet ist, dass ein weiteres Laborhandstück daran anschließbar ist, wobei eine Verteilereinheit (73) zur Versorgung der beiden Laborhandstücke mit Medien vorgesehen ist.

14. Laborhandstück (1) nach einem der vorhergehenden Ansprüche, **gekennzeichnet durch**
eine Steuervorrichtung (70) mit einem Bedienfeld (100), wobei an dem Bedienfeld (100) eine Anzeige (101) und zumindest ein Stellelement (102, 103) vorgesehen sind, und wobei das Bedienfeld (100) von der Steuervorrichtung (70) lösbar ausgebildet ist.

15. Laborhandstück (1) nach einem der vorhergehenden Ansprüche, **gekennzeichnet durch**
eine Steuerung zum Betrieb des Laborhandstücks (1) mit drei unterschiedlichen Betriebsarten, wobei die erste Betriebsart den Betrieb des Laborhandstücks (1) bei variabler Drehzahl, die zweite Betriebsart den Betrieb des Laborhandstücks (1) bei konstanter Drehzahl und die dritte Betriebsart den Betrieb des Laborhandstücks (1) bei variabler oder konstanter Drehzahl umfasst.

## Claims

1. A laboratory handpiece (1) for fine processing and post-processing in particular of models, dental prostheses, e.g., crowns, impressions, castings or dental restoration bodies with an outer sleeve (2), an electric motor (3), a tool receptacle (4) for a treatment tool, at least one shaft (5) for transferring the rotational motion from the electric motor (3) to the tool receptacle (4), a liquid line (6) passing through the laboratory handpiece (1), a compressed gas supply device (7) passing through the laboratory handpiece (1) and a media-dispensing device (8), which is provided on the tool receptacle (4) and is connectable or connected to the liquid line (6) and the compressed gas supply device (7), **characterized in that**
the compressed gas supply device (7) comprises a first compressed gas supply unit (7A) for continuous compressed gas supply and a second compressed gas supply unit (7B) for discontinuous compressed gas supply, the compressed gas supply unit (7B) for discontinuous compressed gas supply having a switch element, preferably a switch valve (91), and the two compressed gas supply units (7A, 7B) having at least partially shared components or sections, for example, shared line sections.

2. The laboratory handpiece (1) according to Claim 1, **characterized in that** the compressed gas supply device (7) is formed by the outer sleeve (2) of the laboratory handpiece (1) in the area of the electric motor (3), so that the compressed gas can flow around and/or through the electric motor (3) for cooling.

3. The laboratory handpiece (1) according to Claim 2, **characterized in that** the compressed gas supply device (7) comprises a compressed gas line (10) in a section adjacent to the electric motor (3).

4. The laboratory handpiece (1) according to any one of the preceding claims, **characterized in that**
the media-dispensing device (8) has one or more openings, at least of one of which preferably comprises a nozzle.

5. The laboratory handpiece (1) according to Claim 4, **characterized in that** different media can be dispensed through openings assigned to each of them.

6. The laboratory handpiece (1) according to Claim 1, **characterized in that** the compressed gas supply unit (7A) for continuous compressed gas supply comprises a first compressed gas line (9A) for supplying a compressed gas for generating a compressed gas-liquid mixture and a second compressed gas line (9B, 10) for supplying a compressed gas for generating a compressed gas stream.

7. The laboratory handpiece (1) according to any one of the preceding claims, **characterized by**
a guiding device (11) for guiding the compressed gas in a preferred direction, wherein the guiding device (11) is directly or indirectly connected or connectable to the media-dispensing device (8) or comprises at least parts of the media-dispensing device (8).

8. The laboratory handpiece (1) according to Claims 2 and 7, **characterized by** a guiding device (11A) for guiding the compressed gas stream flowing around and/or through the electric motor (3) to the media-dispensing device (8).

9. The laboratory handpiece (1) according to Claim 7 or 8, **characterized in that** the guiding device (11) has a tapering flow cross section.

10. The laboratory handpiece (1) according to any one of Claims 7, 8 or 9, **characterized by**
a guiding device (11B) for providing flow around a bearing (12) arranged between the electric motor (3) and the media-dispensing device (8).

11. The laboratory handpiece (1) according to any one of Claims 7, 8, 9 or 10, **characterized in that**
the guiding device (11) comprises a compressed gas line (10) and/or an apron and/or a sleeve (13, 15) and/or at least one sealing element (14), in particular a labyrinth gland (14A), and/or a borehole (66) and/or an annular channel (67).

12. The laboratory handpiece (1) according to any one of the preceding claims, **characterized by**
a control device (70) and a supply tube, wherein the liquid line (6) and the compressed gas supply device (7) extend through the supply tube and preferably into the control device (70).

13. The laboratory handpiece (1) according to Claim 12, **characterized in that** the control device (70) is designed so that an additional laboratory handpiece can be connected to it, wherein a distributor unit (73) is provided for supplying media to the two laboratory handpieces.

14. The laboratory handpiece (1) according to any one of the preceding claims, **characterized by**
a control device (70) having an operating field (100), wherein a display (101) and at least one actuator element (102, 103) are provided in the operating field (100) and wherein the operating field (100) is designed to be releasable from the control device (70).

15. The laboratory handpiece (1) according to any one of the preceding claims, **characterized by**
a control for operation of the laboratory handpiece (1) having three different operating modes, the first operating mode comprising the operation of the laboratory handpiece (1) at a variable speed, the second operating mode comprising operation of the laboratory handpiece (1) at a constant rotational speed and the third operating mode comprising operation of the laboratory handpiece (1) at a variable or constant rotational speed.

## Revendications

1. Pièce à main de laboratoire (1) pour la finition et la reprise en particulier de modèles, de prothèses dentaires, par exemple des couronnes, des empreintes et des moulages ou des corps de restauration dentaire, comprenant un manchon extérieur (2), un moteur électrique (3), un logement d'outil (4) pour un outil d'usinage, au moins un arbre (5) pour transmettre le mouvement de rotation du moteur électrique (3) au logement d'outil (4), un conduit de liquide (6) traversant la pièce à main de laboratoire (1), un dispositif d'alimentation en gaz comprimé (7) traversant la pièce à main de laboratoire (1) et comprenant un dispositif de distribution d'fluide (8) prévu sur le logement d'outil (4), qui peut être relié ou est relié au conduit de liquide (6) et au dispositif d'alimentation en gaz comprimé (7), **caractérisée en ce que** le dispositif d'alimentation en gaz comprimé (7) comprend une première unité d'amenée de gaz comprimé (7A) pour l'amenée continue de gaz comprimé et une deuxième unité d'amenée de gaz comprimé (7B) pour l'amenée discontinue de gaz comprimé, l'unité d'amenée de gaz comprimé (7B) pour l'amenée discontinue de gaz comprimé présente un élément de commutation, de préférence une soupape de commutation (91) et les deux unités d'amenée de gaz comprimé (7A, 7B) présentent au moins partiellement des pièces de construction ou tronçons commun(e)s, par exemple des tronçons de conduit communs.

2. Pièce à main de laboratoire (1) selon la revendication 1, **caractérisée en ce que** le dispositif d'alimentation en gaz comprimé (7) est formé au niveau du moteur électrique (3) par le manchon extérieur (2) de la pièce à main de laboratoire (1), de façon à ce que le moteur électrique (3) puisse être contourné et/ou traversé par le flux de gaz comprimé pour être refroidi.

3. Pièce à main de laboratoire (1) selon la revendication 2, **caractérisée en ce que** le dispositif d'alimentation en gaz comprimé (7) comprend un conduit de gaz comprimé (10) dans un tronçon se raccordant au moteur électrique (3).

4. Pièce à main de laboratoire (1) selon l'une des revendications précédentes, **caractérisée en ce que**
le dispositif de distribution d'fluide (8) présente une ou plusieurs ouverture(s) desquelles au moins une comprend de préférence une buse.

5. Pièce à main de laboratoire (1) selon la revendication 4, **caractérisée en ce que** différents fluides peuvent être distribués par des ouvertures qui leur sont respectivement attribuées.

6. Pièce à main de laboratoire (1) selon la revendication 1, **caractérisée en ce que** l'unité d'amenée de gaz comprimé (7A) pour l'amenée continue de gaz comprimé comprend un premier conduit de gaz comprimé (9A) pour mettre à disposition un gaz comprimé pour produire un mélange gaz comprimé-liquide et un deuxième conduit de gaz comprimé (9B, 10) pour mettre à disposition un gaz comprimé pour produire un flux de gaz comprimé.

7. Pièce à main de laboratoire (1) selon l'une des revendications précédentes, **caractérisée en ce**
**qu'**un dispositif de guidage (11) pour guider le gaz comprimé dans une direction préférée est prévu, sachant que le dispositif de guidage (11) peut être relié ou est relié directement ou indirectement au dispositif de distribution d'fluide (8) ou comprend au moins des parties du dispositif de distribution d'fluide (8).

8. Pièce à main de laboratoire (1) selon les revendications 2 et 7, **caractérisée par** un dispositif de guidage (11A) pour guider le flux de gaz comprimé contournant et/ou traversant le moteur électrique (3) en direction du dispositif de distribution d'fluide (8).

9. Pièce à main de laboratoire (1) selon la revendication 7 ou 8, **caractérisée en ce que** le dispositif de guidage (11) présente une section d'écoulement qui va en diminuant.

10. Pièce à main de laboratoire (1) selon l'une des revendications 7, 8 ou 9, **caractérisée par**
un dispositif de guidage (11B) pour contourner un palier (12) disposé entre le moteur électrique (3) et le dispositif de distribution d'fluide (8).

11. Pièce à main de laboratoire (1) selon l'une des revendications 7, 8, 9 ou 10, **caractérisée en ce que**
le dispositif de guidage (11) comprend un conduit de gaz comprimé (10) et / ou un tablier et / ou un manchon (13, 15) et / ou au moins un élément étanche (14), en particulier un joint labyrinthe (14A), et / ou un perçage (66) et / ou un canal circulaire (67).

12. Pièce à main de laboratoire (1) selon l'une des revendications précédentes, **caractérisée par**
un dispositif de commande (70) et un tuyau d'alimentation, sachant que le conduit de liquide (6) et le dispositif d'alimentation en gaz comprimé (7) s'étendent à travers le tuyau d'alimentation et de préférence jusque dans le dispositif de commande (70).

13. Pièce à main de laboratoire (1) selon la revendication 12, **caractérisée en ce que** le dispositif de commande (70) est ainsi conçu qu'une pièce à main de laboratoire supplémentaire peut être raccordée dessus, sachant qu'une unité distributrice (73) est prévue pour alimenter les deux pièces à main de laboratoire avec des fluides.

14. Pièce à main de laboratoire (1) selon l'une des revendications précédentes, **caractérisée par**
un dispositif de commande (70) avec un panneau de commande (100), sachant qu'un affichage (101) et au moins un élément de réglage (102, 103) sont prévus sur le panneau de commande (100) et sachant que le panneau de commande (100) est conçu en étant séparable du dispositif de commande (70).

15. Pièce à main de laboratoire (1) selon l'une des revendications précédentes, **caractérisée par**
une commande pour faire fonctionner la pièce de main de laboratoire (1) avec trois modes de fonctionnement différents, sachant que le premier mode de fonctionnement comprend le fonctionnement de la pièce de main de laboratoire (1) à vitesse variable, le deuxième mode de fonctionnement comprend le fonctionnement de la pièce de main de laboratoire (1) à vitesse constante et le troisième mode de fonctionnement comprend le fonctionnement de la pièce de main de laboratoire (1) à vitesse variable ou constante.
